# EUROPEAN PATENT APPLICATION

(11) **EP 4 838 898 A1**
(43) Date of publication of application: **11.11.2026**
(21) Application number: 25820419.7
(22) Date of filing: 27.02.2025
(51) Int. Cl.: H04N 21/485, H04N 21/422, H04N 21/439, H04N 21/81, G06F 3/16

(54) **ELECTRONIC DEVICE AND CONTROL METHOD THEREFOR**

(30) Priority: 03.06.2024 KR 20240072215
(71) Applicant: Samsung Electronics Co., Ltd., Suwon-si, Gyeonggi-do 16677 (KR)
(72) Inventor: SON, Sunmin, Suwon-si Gyeonggi-do 16677 (KR); LEE, Sangyoon, Suwon-si Gyeonggi-do 16677 (KR); JUNG, Jingun, Suwon-si Gyeonggi-do 16677 (KR); YUN, Soyoung, Suwon-si Gyeonggi-do 16677 (KR)
(74) Representative: Appleyard Lees IP LLP
(86) International application number: PCT/KR2025/002740
(87) International publication number: WO 2025/254300

(57) **Abstract**

An electronic apparatus may include at least one processor configured to control the electronic apparatus, wherein the at least one processor is configured to execute at least one instruction to: control a speaker to play content at a first volume; receive a first control instruction from the external device through a communication interface, the first control instruction being for decreasing an audio volume of the content while the external device outputs guidance audio for guiding a user input; control the speaker to decrease the audio volume of the content based on the first control instruction; receive a second control instruction from the external device through the communication interface, the second control instruction being for restoring the audio volume of the content to the first volume; and control the speaker to restore the audio volume of the content to the first volume based on the second control instruction.

## Description

### Technical Field

The present disclosure relates to an electronic apparatus and a controlling method thereof, and more particularly, to an electronic apparatus that outputs guidance audio for guiding a user input and a device that performs communication with the apparatus.

### Background Art

A mobile device and a television (TV) may be used in conjunction with each other to provide a user with various functions and conveniences. In particular, a talkback function of the mobile device is widely used as an assistive technology for a visually impaired person. The talkback function is a function that outputs, on the mobile device, guidance audio for guiding information on a screen or the like.

If the user simultaneously uses the mobile device and the TV, a problem may occur in which the guidance audio from the mobile device and audio output from the TV may overlap each other. For example, if the user manipulates the TV by using a smartphone, the TV may also output separate audio while the guidance audio is output from the smartphone, which may cause the two audios to overlap each other. In this case, these overlapping audios may cause inconvenience because it is difficult for the user to clearly hear the guidance audio.

### Disclosure

### Technical Solution

According to an aspect of the disclosure, an electronic apparatus may include: a speaker; a communication interface configured to communicate with an external device configured to control the electronic apparatus; memory storing at least one instruction; and at least one processor connected to the memory and configured to control the electronic apparatus, wherein the at least one processor is configured to execute the at least one instruction to: control the speaker to play content at a first volume; receive a first control instruction from the external device through the communication interface, the first control instruction being for decreasing an audio volume of the content while the external device outputs guidance audio for guiding a user input; control the speaker to decrease the audio volume of the content based on the first control instruction; receive a second control instruction from the external device through the communication interface, the second control instruction being for restoring the audio volume of the content to the first volume; and control the speaker to restore the audio volume of the content to the first volume based on the second control instruction.

The at least one processor may be further configured to execute the at least one instruction to: receive information from the external device through the communication interface, the information including a time point at which the audio volume of the content is decreased; and decrease the audio volume of the content at the time point.

The at least one processor may be further configured to execute the at least one instruction to: control the speaker to output audio for an operation of the electronic apparatus that corresponds to a third control instruction, based on receiving the third control instruction from the external device through the communication interface.

The at least one processor may be further configured to execute the at least one instruction to: control the speaker to decrease the restored audio volume of the content based on receiving a control instruction from the external device through the communication interface, while the external device outputs additional guidance audio for guiding an additional user input.

The at least one processor may be further configured to execute the at least one instruction to: execute an application corresponding to at least one text, based on the user input including the at least one text, and receiving a third control instruction for controlling an operation of the electronic apparatus through the communication interface.

The at least one processor may be further configured to execute the at least one instruction to: detect an occurrence of an event; transmit a decreasing control instruction to the external device through the communication interface, the decreasing control instruction being for decreasing volume of audio output by the external device to a second volume, while a voice notifying the occurrence of the event is output through the speaker; and transmit a restoring control instruction to the external device through the communication interface, the restoring control instruction being for restoring the decreased volume of the audio output by the external device from the second volume, based on output of the voice notifying the occurrence of the event being completed.

The at least one processor may be further configured to execute the at least one instruction to: detect the occurrence of the event while the content is played; and decrease the audio volume of the content that is output through the speaker while outputting the voice notifying the occurrence of the event through the speaker.

The at least one processor may be further configured to execute the at least one instruction to: transmit information including a time point at which the voice notifying the occurrence of the event is output to the external device through the communication interface, to decrease the volume of the audio output by the external device at the time point.

According to an aspect of the disclosure, a method of controlling an electronic apparatus, may include: playing content at a first volume; receiving a first control instruction from an external device, the first control instruction being for decreasing an audio volume of the content while guidance audio for guiding a user input is output by the external device; decreasing the audio volume of the content based on the first control instruction; receiving a second control instruction from the external device, the second control instruction being for restoring the audio volume of the content to the first volume; and restoring the audio volume of the content to the first volume based on the second control instruction.

The method may further include: receiving information from the external device, the information including a time point at which the audio volume of the content is decreased; and decreasing the audio volume of the content at the time point.

The method may further include: outputting audio for an operation of the electronic apparatus that corresponds to a third control instruction, based on receiving the third control instruction from the external device.

The method may further include: decreasing the restored audio volume of the content based on receiving a control instruction from the external device, while additional guidance audio for guiding an additional user input is output by the external device.

The method may further include: executing an application corresponding to at least one text, based on the user input including the at least one text, and receiving a third control instruction for controlling an operation of the electronic apparatus.

The method may further include: detecting an occurrence of an event; transmitting a decreasing control instruction to the external device, the decreasing control instruction being for decreasing volume of audio output by the external device to a second volume, while a voice notifying the occurrence of the event is output; and transmitting a restoring control instruction to the external device, the restoring control instruction being for restoring the decreased volume of the audio output by the external device from the second volume, based on output of the voice notifying the occurrence of the event being completed.

The method may further include: decreasing the audio volume of the content that is output through a speaker while outputting the voice notifying the occurrence of the event.

The method may further include: outputting audio for an operation of the electronic apparatus that corresponds to a third control instruction, based on receiving, from the external device, the third control instruction for controlling the operation of the electronic apparatus.

The method may further include: outputting audio for an operation of the electronic apparatus by decreasing the audio volume of the restored content, based on receiving, from the external device, a control instruction for decreasing the audio volume of the restored content while the external device outputs additional guidance audio for guiding an additional user input.

The method may further include: executing an application corresponding to at least one text, based on receiving a user input for inputting the at least one text and a third control instruction for controlling an operation of the electronic apparatus.

The method may further include: detecting an occurrence of an event; transmitting, to the external device, a control instruction for decreasing a volume of audio output by the external device while a voice notifying the occurrence of the event is output through the speaker; and transmitting, to the external device, a control instruction for restoring the decreased volume of the audio output by the external device, based on output of the voice notifying the occurrence of the event being completed.

The method may further include: decreasing a volume of audio corresponding to the content while a voice notifying the occurrence of the event is output through the speaker.

The method may further include: transmitting, to the external device, information including a time point at which the voice notifying the occurrence of the event is output, to decrease the volume of the audio output by the external device at the time point.

According to one or more embodiments of the present disclosure, provided is a non-transitory computer-readable recording medium including a program for executing a controlling method of an electronic apparatus, wherein the method includes playing content, receiving a first control instruction for decreasing an audio volume of the content while guidance audio for guiding a user input is output by the external device, outputting the content by decreasing the audio volume of the content in response to the first control instruction, receiving a second control instruction for restoring the decreased audio volume from the external device, and outputting the content by restoring the audio volume of the content in response to the second control instruction.

In receiving of the first control instruction from the external device, information on a time point at which the volume of the audio output by the external device is decreased may be received from the external device, and in the outputting of the content by decreasing the audio volume of the content in response to the first control instruction, the audio volume of the content may be decreased from the time point at which the volume of the audio output by the external device is decreased.

The method may further include outputting audio for an operation of the electronic apparatus that corresponds to a third control instruction based on the third control instruction for controlling the operation of the electronic apparatus being received from the external device.

The method may further include outputting the audio for the operation of the electronic apparatus by decreasing the restored audio volume of the content based on a control instruction for decreasing the restored audio volume of the content being received from the external device while additional guidance audio for guiding an additional user input is output by the external device.

### Description of Drawings

FIG. 1 is a diagram for describing operations of a first device and a second device according to one or more embodiments of the present disclosure;
FIG. 2 is a block diagram for describing a configuration of the first device according to one or more embodiments of the present disclosure;
FIG. 3 is a block diagram for describing a configuration of the second device according to one or more embodiments of the present disclosure;
FIG. 4 is a diagram for describing a method of the second device for controlling the first device according to one or more embodiments of the present disclosure;
FIG. 5 is a diagram for describing a user interface (UI) displayed by the second device according to one or more embodiments of the present disclosure;
FIG. 6 is a diagram for describing a mapping relationship between a user input and the operation of the second device according to one or more embodiments of the present disclosure;
FIG. 7 is a sequence diagram for describing a method of the second device for controlling the first device according to one or more embodiments of the present disclosure;
FIG. 8 is a diagram for describing a method of the first device or the second device for controlling an audio volume over time according to one or more embodiments of the present disclosure;
FIG. 9 is a diagram for describing a method of the first device acquiring a plurality of second user inputs for controlling the second device according to one or more embodiments of the present disclosure;
FIG. 10 is a diagram for describing a method of the first device or the second device for controlling the audio volume over time according to one or more embodiments of the present disclosure;
FIG. 11 is a sequence diagram for describing a method of the first device for controlling a volume of the second device according to one or more embodiments of the present disclosure;
FIG. 12 is a diagram for describing a method of the first device or the second device for controlling the audio volume according to one or more embodiments of the present disclosure;
FIG. 13 is a sequence diagram for describing a method of the first device for controlling the volume of the second device according to one or more embodiments of the present disclosure;
FIG. 14 is a diagram for describing a method of the first device or the second device for controlling the audio volume according to one or more embodiments of the present disclosure; and
FIG. 15 is a diagram for describing a controlling method of the first device according to one or more embodiments of the present disclosure.

### Mode for Invention

The present disclosure may be variously modified and have various embodiments, and specific embodiments of the present disclosure are thus shown in the drawings and described in detail in the detailed description. However, it should be understood that the scope of the present disclosure is not limited to the specific embodiments, and includes various modifications, equivalents, and/or alternatives according to the embodiments of the present disclosure. Throughout the accompanying drawings, similar components are denoted by similar reference numerals.

In describing the present disclosure, omitted is a detailed description of a case where it is decided that the detailed description of the known functions or configurations related to the present disclosure may unnecessarily obscure the gist of the present disclosure.

In addition, the following embodiments may be modified in several different forms, and the scope and spirit of the present disclosure are not limited to the following embodiments. Rather, these embodiments are provided to make the present disclosure thorough and complete, and completely transfer the spirit of the present disclosure to those skilled in the art.

Terms used in the present disclosure are used only to describe the specific embodiments rather than limiting the scope of the present disclosure. A term of a singular number may include its plural number unless explicitly indicated otherwise in the context.

In the present disclosure, an expression "have," "may have," "include," "may include" or the like, indicates the presence of a corresponding feature (for example, a numerical value, a function, an operation, or a component such as a part), and does not exclude the presence of an additional feature.

In the present disclosure, an expression "A or B," "at least one of A and/or B," "one or more of A and/or B", or the like, may include all possible combinations of items enumerated together. For example, "A or B," "at least one of A and B" or "at least one of A or B" may indicate all of 1) a case where at least one A is included, 2) a case where at least one B is included, or 3) a case where both of at least one A and at least one B are included.

Expressions "first," "second," and the like used in the present disclosure, may indicate various components regardless of the sequence and/or importance of the components. These expressions are used only to distinguish one component and another component from each other, and do not limit the corresponding components.

If any component (for example, a first component) is mentioned to be "(operatively or communicatively) coupled with/to" or "connected to" another component (for example, a second component), it should be understood that any component is directly coupled to another component or may be coupled to another component through still another component (for example, a third component).

On the other hand, if any component (for example, the first component) is mentioned to be "directly coupled" or "directly connected to" another component (for example, the second component), it should be understood that still another component (for example, the third component) is not present between any component and another component.

An expression "configured (or set) to" used in the present disclosure may be replaced with an expression "suitable for," "having the capacity to," "designed to," "adapted to," "made to," or "capable of" based on a context. A term "configured (or set) to" may not necessarily mean "specifically designed to" in hardware.

Rather, an expression "a device configured to" in some contexts may indicate that the device may "perform~" together with another device or component. For example, "a processor configured (or set) to perform A, B and C" may indicate a dedicated processor (for example, an embedded processor) for performing the corresponding operations or a generic-purpose processor (for example, a central processing unit (CPU) or an application processor) that may perform the corresponding operations by executing one or more software programs stored in a memory device.

In the embodiments, a "module" or a "~er/or" may perform at least one function or operation, and be implemented in hardware or software, or be implemented by a combination of hardware and software. In addition, a plurality of "modules" or a plurality of "~ers/ors" may be integrated in at least one module and implemented by at least one processor except for a "module" or an "~er/or" that needs to be implemented by specific hardware.

Meanwhile, the various elements and regions in the drawings are schematically shown. Therefore, the spirit of the present disclosure is not limited by relative sizes or intervals shown in the accompanying drawings.

Hereinafter, the embodiments of the present disclosure are described in detail with reference to the accompanying drawings so that those skilled in the art to which the present disclosure pertains may easily practice the present disclosure.

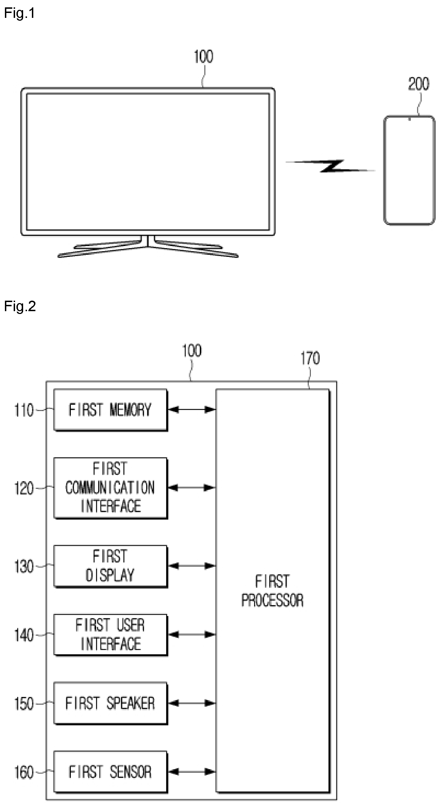

FIG. 1 is a diagram for describing operations of a first device and a second device according to one or more embodiments of the present disclosure.

Referring to FIG. 1, a first device 100 may communicate with a second device 200.

In the present disclosure, the first device 100 may be referred to as an "electronic apparatus" and the second device 200 may be referred to as an "external device". Alternatively, the first device 100 may be referred to as the "external device" and the second device 200 may be referred to as the "electronic apparatus".

The second device 200 may be a device that controls the first device 100. The first device 100 may be implemented as a display device capable of playing content, such as a television (TV). The second device 200 may be implemented as a smartphone operating a remote control application for remotely controlling the first device 100.

In the present disclosure, the "remote control application" may be replaced with a term having the same/similar concept, such as a "remote control function" or a "remote control application".

The remote control application operated/driven on the second device 200 may display a user interface (UI) including a plurality of UI elements for controlling the first device 100.

The second device 200 may acquire a user input through the UI. Here, the user input may be a touch input that touches, drags, taps, or swipes a display of the second device 200 by using at least one finger.

In the present disclosure, "the user input" may be replaced with a term having the same/similar concept, such as a "user interaction", a "user touch", a "user touch input", a "user drag", a "user drag input", a "user swipe", a "user swipe input", a "user gesture", a "user gesture input", a "user touch gesture", a "user touch gesture input", a "user voice", or a "user voice input".

The second device 200 may perform an operation for supporting a visually impaired person's control of the remote control application for the visually impaired person to use the remote control application.

The second device 200 may output guidance audio for guiding the user input through a speaker. In detail, the second device 200 may output the guidance audio including information on the displayed UI. Alternatively, the second device 200 may output the guidance audio including information on the UI element that a user activates or selects. Alternatively, the second device 200 may output the guidance audio including information displayed on a screen for receiving the user input. Accordingly, the user may manipulate the UI based on user intent through the guidance audio without viewing the screen displayed by the second device 200.

For example, the second device 200 may output the guidance audio saying "channel" if the user selects the UI element for controlling the channel.

In the present disclosure, "the guidance audio" may be replaced with a term having the same or similar concept, such as "guidance sound", "guide voice", "voice feedback", "feedback audio", "talkback", or "talkback audio".

The first device 100 may output separate audio at a first volume, such as audio of the content being played if the second device 200 outputs the guidance audio. In this case, the guidance audio output by the second device 200 may not be heard clearly due to the audio of the content being output by the first device 100.

Accordingly, the second device 200 may control the first device 100 to output the content by decreasing the audio volume of the content while the second device 200 outputs the guidance audio.

In addition, the second device 200 may control the first device 100 to output the content by restoring the audio volume of the content to the first volume if the guidance audio is completely output.

The configurations and specific operations of the first device 100 and the second device 200 are described with reference to the drawings below.

FIG. 2 is a block diagram for describing the configuration of the first device according to one or more embodiments of the present disclosure.

Referring to FIG. 2, the first device 100 may include a first memory 110, a first communication interface 120, a first display 130, a first user interface 140, a first speaker 150, a first sensor 160, and a first processor 170. The first device 100 may omit some of the above-mentioned components or further include another component in addition to the above-mentioned components.

The first memory 110 may store at least one instruction regarding the first device 100. The first memory 110 may store an operating system (O/S) for operating the first device 100. In addition, the first memory 110 may store various software programs or applications for operating the first device 100 according to various embodiments of the present disclosure. In addition, the first memory 110 may include a semiconductor memory, such as a flash memory, or a magnetic storage medium, such as a hard disk.

According to one or more embodiments of the present disclosure, the first memory 110 may store information on content to be played by the first device 100. Here, the information on the content may include video and audio signals for playing the content.

According to one or more embodiments of the present disclosure, the first memory 110 may store at least one instruction for controlling audio output by the first device 100 while the second device 200 outputs the guidance audio.

The first communication interface 120 may be a component including circuitry and communicating with the external device or a server. The first communication interface 120 may communicate with the external device or the server by using a wired or wireless communication method. The first communication interface 120 may include a Bluetooth module, a wireless-fidelity (Wi-Fi) module, an infrared (IR) module, a local area network (LAN) module, an Ethernet module, or the like. Here, each communication module may be implemented in the form of at least one hardware chip. In addition to the above-described communication methods, a wireless communication module may include at least one communication chip performing the communication based on various wireless communication standards such as zigbee, universal serial bus (USB), mobile industry processor interface camera serial interface (MIPI CSI), third generation (3G), 3rd generation partnership project (3GPP), long term evolution (LTE), LTE advanced (LTE-A), 4th generation (4G), and 5th generation (5G). However, this configuration is only one or more embodiments, and the first communication interface 120 may use at least one communication module among various communication modules.

According to one or more embodiments of the present disclosure, the first communication interface 120 may communicate with the second device 200 by using the wireless communication standard described above. The first communication interface 120 may receive a control instruction for controlling the operation of the first device 100 from the second device 200. The first communication interface 120 may transmit a control instruction for controlling the operation of the second device 200 to the second device 200.

The first display 130 may be implemented as any of various types of displays such as a liquid crystal display (LCD), an organic light emitting diode (OLED) display, a plasma display panel (PDP), or the like. The first display 130 may also include a driving circuit, a backlight unit, and the like, which may be implemented in a form such as an amorphous silicon thin film transistor (a-si TFT), a low temperature poly silicon (LTPS) TFT, or an organic TFT (OTFT). Meanwhile, the first display 130 may be implemented as a touch screen combined with a touch sensor, a flexible display, a three-dimensional (3D) display, or the like. In addition, the first display 130 may include not only a display panel outputting an image, but also a bezel housing the display panel according to one or more embodiments of the present disclosure. In particular, the bezel may include the touch sensor for detecting user interaction according to one or more embodiments of the present disclosure.

According to one or more embodiments of the present disclosure, the first display 130 may display the video signal of the content.

The first user interface 140 may be implemented as a device such as a button, a touch pad, a mouse or a keyboard, or may be implemented as a touch screen which may also perform the above-described display function and a manipulation input function together. Here, the button may be any of various types of buttons such as a mechanical button, a touch pad, or a wheel, which is disposed in any region, such as the front surface portion, side surface portion, or rear surface portion of a body appearance of the first device 100.

The first speaker 150 is a component for outputting the audio signal. In particular, the first speaker 150 may include an audio output mixer, an audio signal processor, or an audio output module. The audio output mixer may mix the plurality of audio signals to be output into at least one audio signal. For example, the audio output mixer may mix an analog audio signal and another analog audio signal (e.g., analog audio signal received from the outside) into at least one analog audio signal. The audio output module may include a speaker or an output terminal.

According to one or more embodiments of the present disclosure, the first speaker 150 may output the content audio. The first speaker 150 may output the content audio at a first volume or output the content audio at a second volume lower than the first volume in response to the control instruction received from the second device 200.

The first sensor 160 may detect the operation state or external environment of the first device 100 and generate an electrical signal or a data value, corresponding to the detected state. The first sensor 160 may include an image sensor, an acceleration sensor, a microphone sensor, or the like.

According to one or more embodiments of the present disclosure, the microphone sensor included in the first sensor 160 may detect a user speech and perform an operation corresponding to the user speech.

The first processor 170 may control overall operations and functions of the first device 100. In detail, the first processor 170 may be connected to the configuration of the first device 100 that includes the first memory 110, and execute at least one instruction stored in the first memory 110 as described above to control the overall operations of the first device 100.

The first processor 170 may include at least one processor. In detail, at least one processor may include at least one of a central processing unit (CPU), a graphics processing unit (GPU), an accelerated processing unit (APU), a many integrated core (MIC), a digital signal processor (DSP), a neural processing unit (NPU), a main processing unit (MPU), a hardware accelerator, or a machine learning accelerator. At least one processor may control one of other components of the electronic apparatus or any combination thereof, and perform an operation related to communication or data processing. At least one processor may execute at least one program or instruction stored in the first memory 110. For example, at least one processor may perform a method according to one or more embodiments of the present disclosure by executing at least one instruction stored in the first memory 110.

The first processor 170 may control the operation of the first device 100 according to the present disclosure by controlling the configuration included in the first device 100.

In detail, the first processor 170 may control the first display 130 to display a screen of the content, and control the first speaker 150 to output the content audio.

The first processor 170 may control the first speaker 150 to output the content at the decreased audio volume. The first processor 170 may control the first speaker 150 to output the content by restoring the decreased audio volume of the content.

The first processor 170 may control the first communication interface 120 to transmit the control instruction for controlling the operation of the second device 200 to the second device 200. In addition, the first processor 170 may receive the control instruction for controlling the operation of the first device 100 from the second device 200 through the first communication interface 120.

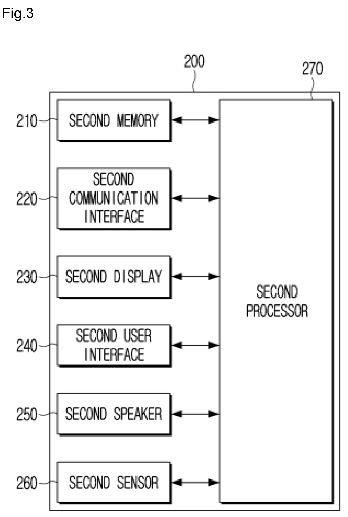

FIG. 3 is a block diagram for describing a configuration of the second device according to one or more embodiments of the present disclosure.

Referring to FIG. 3, the second device 200 may include a second memory 210, a second communication interface 220, a second user interface 240, a second display 230, a second speaker 250, a second sensor 260, and a second processor 270.

The second memory 210 may store at least one instruction regarding the second device 200. The second memory 210 may store an operating system (O/S) for operating the second device 200. In addition, the second memory 210 may store various software programs or applications for operating the second device 200 according to the various embodiments of the present disclosure. In addition, the second memory 210 may include a semiconductor memory, such as a flash memory, or a magnetic storage medium, such as a hard disk.

According to one or more embodiments of the present disclosure, the second memory 210 may store the remote control application for controlling the first device 100. In addition, the second memory 210 may store a keyboard application for acquiring text input from the user. Here, the keyboard application may be a Braille keyboard application that supports a Braille function. For example, the user may input six-dot Braille by using six fingers through the Braille keyboard application.

According to one or more embodiments of the present disclosure, the second memory 210 may store at least one instruction for controlling the audio output by the first device 100 while the second device 200 outputs the guidance audio.

The second communication interface 220 may be a component including circuitry and communicating with the external device or the server. The second communication interface 220 may communicate with the external device or the server by using the wired or wireless communication method. The first communication interface 120 may include a Bluetooth module, a wireless-fidelity (Wi-Fi) module, an infrared (IR) module, a local area network (LAN) module, an Ethernet module, or the like. Here, each communication module may be implemented in the form of at least one hardware chip. In addition to the above-described communication methods, a wireless communication module may include at least one communication chip performing the communication based on various wireless communication standards such as zigbee, universal serial bus (USB), mobile industry processor interface camera serial interface (MIPI CSI), third generation (3G), 3rd generation partnership project (3GPP), long term evolution (LTE), LTE advanced (LTE-A), 4th generation (4G), and 5th generation (5G). However, this configuration is only one or more embodiments, and the second communication interface 220 may use at least one communication module among various communication modules.

According to one or more embodiments of the present disclosure, the second communication interface 220 may communicate with the first device 100 by using the wireless communication standard described above. The second communication interface 220 may transmit the control instruction for controlling the operation of the second device 200 to the first device 100. In detail, the second communication interface 220 may transmit, to the first device 100, the control instruction for decreasing the audio volume output by the first device 100 or for restoring the decreased audio volume.

The second display 230 may be implemented as any of various types of displays such as a liquid crystal display (LCD), an organic light emitting diode (OLED) display, a plasma display panel (PDP), or the like. The second display 230 may include a driving circuit, a backlight unit, and the like, which may be implemented in a form such as an amorphous silicon thin film transistor (a-si TFT), a low temperature poly silicon (LTPS) TFT, or an organic TFT (OTFT). Meanwhile, the second display 230 may be implemented as a touch screen combined with a touch sensor, a flexible display, a three-dimensional (3D) display, or the like. In addition, the second display 230 according to one or more embodiments of the present disclosure may include not only a display panel outputting an image, but also a bezel housing the display panel. In particular, the bezel may include the touch sensor for detecting user interaction according to one or more embodiments of the present disclosure.

According to one or more embodiments of the present disclosure, the second display 230 may display the video signal included in the content.

According to one or more embodiments of the present disclosure, the second display 230 may display a screen of the remote control application that controls the first device 100. The second display 230 may display a UI screen for controlling the first device 100.

The second user interface 240 may be implemented as a device such as a button, a touch pad, a mouse, or a keyboard, or may be implemented as a touch screen capable of also performing a manipulation input function together with the above-described display function. Here, the button may be any of various types of buttons such as a mechanical button, a touch pad, or a wheel, which is disposed in any region, such as the front surface portion, side surface portion, or rear surface portion of a body appearance of the second device 200.

According to one or more embodiments of the present disclosure, the second user interface 240 implemented as the touch screen may acquire a user touch input.

The second speaker 250 is a component for outputting the audio signal. In particular, the second speaker 250 may include an audio output mixer, an audio signal processor, and an audio output module. The audio output mixer may mix the plurality of audio signals to be output into at least one audio signal. For example, the audio output mixer may mix an analog audio signal and another analog audio signal (e.g., analog audio signal received from the outside) into at least one analog audio signal. The audio output module may include the speaker or an output terminal.

According to one or more embodiments of the present disclosure, the second speaker 250 may output the content audio. The second speaker 250 may output the content audio at the first volume or the content audio at the second volume lower than the first volume.

According to one or more embodiments of the present disclosure, the second speaker 250 may output the guidance audio for guiding the user input.

The second sensor 260 may detect the operation state or external environment of the second device 200, and generate an electrical signal or a data value corresponding to the detected state. The second sensor 260 may include an image sensor, an acceleration sensor, or a microphone sensor.

According to one or more embodiments of the present disclosure, the acceleration sensor may detect a movement of the second device 200. According to one or more embodiments of the present disclosure, the microphone sensor may detect the user speech. The microphone sensor may detect the user speech.

The second processor 270 may control overall operations and functions of the second device 200. In detail, the second processor 270 may be connected to the configuration of the second device 200 that includes the second memory 210, and execute at least one instruction stored in the second memory 210 as described above, thereby controlling the overall operations of the second device 200.

The second processor 270 may include at least one processor. In detail, at least one processor may include at least one of a central processing unit (CPU), a graphics processing unit (GPU), an accelerated processing unit (APU), a many integrated core (MIC), a digital signal processor (DSP), a neural processing unit (NPU), a main processing unit (MPU), a hardware accelerator, or a machine learning accelerator. At least one processor may control one of other components of the electronic apparatus or any combination thereof, and perform an operation related to communication or data processing. At least one processor may execute at least one program or instruction stored in the second memory 210. For example, at least one processor may perform a method according to one or more embodiments of the present disclosure by executing at least one instruction stored in the second memory 210.

The second processor 270 may control the operation of the second device 200 according to the present disclosure by controlling the configuration included in the second device 200.

In detail, the second processor 270 may control the second display 230 to display a screen of the content, and control the second speaker 250 to output the content audio.

The second processor 270 may control the second speaker 250 to decrease the audio volume of the content or play the content by restoring the decreased audio volume of the content.

The second processor 270 may control the second communication interface 220 to transmit the control instruction for controlling the operation of the first device 100 to the first device 100. In addition, the second processor 270 may receive the control instruction for controlling the operation of the second device 200 from the first device 100 through the second communication interface 220.

A method for controlling the first device 100 or the second device 200 according to one or more embodiments of the present disclosure is described with reference to the drawings below.

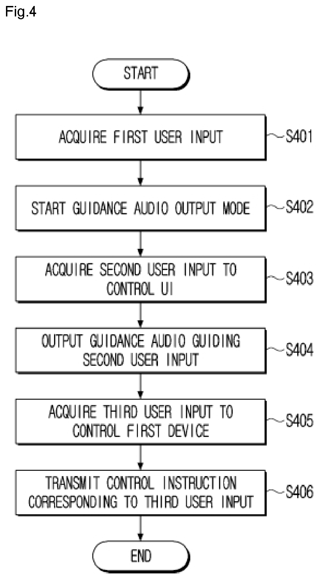

FIG. 4 is a diagram for describing a method of the second device for controlling the first device according to one or more embodiments of the present disclosure.

Referring to FIG. 4, the second device 200 may acquire a first user input to start a guidance audio output mode (S401). Here, the second device 200 may acquire the first user input while the remote control application is executed. Alternatively, the second device 200 may execute the remote control application if the first user input is acquired while the remote control application is not executed.

The guidance audio output mode may be a mode in which the first device 100 outputs the guidance audio for guiding the user input.

In the present disclosure, "the guidance audio output mode" may be replaced with a term having the same/similar concept such as a "braille remote control mode", a "guide remote control mode", a "braille remote control input mode", a "visually impaired person support mode", a "talkback mode", or an "accessibility mode".

In detail, the second device 200 may acquire the first user input through the acceleration sensor, the microphone sensor, or the second user interface 240.

The first user input may be a user input of detecting a predetermined movement of the second device 200. The second device 200 may detect the movement of the second device 200 through the acceleration sensor of the second sensor 260. In addition, the second device 200 may identify whether the detected movement of the second device 200 corresponds to the predetermined movement. For example, the predetermined movement may be a movement in which the second device 200 is rotated from a state where the second display 230 faces the user to a state where the second display 230 faces away from the user. That is, the predetermined movement may be a movement detected by a user gesture of holding the second device 200 upside down.

Alternatively, the first user input may be the user input in which the user says a specific sentence. The second device 200 may detect the user speech through the microphone sensor of the second sensor 260. The second device 200 may detect that the first user input is acquired if the detected user speech matches a predetermined speech or has a similarity greater than or equal to a predetermined value. For example, the second device 200 may detect that the first user input is acquired if a user speech, "Execute the remote control." is detected.

Alternatively, the first user input may be a predetermined touch, drag, tap, or swipe input through the second display 230.

The second device 200 may start the guidance audio output mode (S402) if the first user input is acquired.

The second device 200 may output audio for notifying the start of the guidance audio output mode through the second speaker 250 if the guidance audio output mode starts. For example, the second device 200 may output a voice such as "The guidance audio output mode starts." through the second speaker 250.

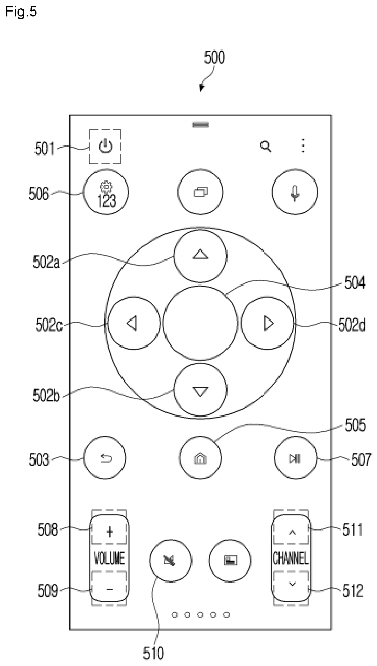

Meanwhile, the first user input may be acquired while the UI for controlling the first device 100 is displayed on the second display 230. Alternatively, the second device 200 may display the UI for controlling the first device 100 through the second display 230 if the first user input is acquired and the guidance audio output mode starts while the UI is not displayed by the second display 230. The UI displayed by the second device 200 is described with reference to FIG. 5.

FIG. 5 is a diagram for describing the UI displayed by the second device according to one or more embodiments of the present disclosure.

Referring to FIG. 5, the remote control application executed on the second device 200 may display a UI 500 for controlling the first device 100. Here, the UI screen may include the plurality of UI elements for controlling the first device 100. Each of the plurality of UI elements may be implemented in the form of an icon selectable by the user. If each of the plurality of UI elements is selected, the second device 200 may transmit the control instruction for performing an operation corresponding to the selected UI element to the first device 100.

For example, the UI screen may include an UI element 501 for turning on/off the first device 100, an UI element 502a, 502b, 502c, or 502d for inputting a directional key input (up, down, left, or right) to the first device 100, an UI element 503 for returning to a previous operation, an UI element 504 for selecting the activated UI element, an UI element 505 for displaying a home screen, an UI element 506 for displaying a menu screen, an UI element 507 for playing or pausing the content, an UI element 508 or 509 for increasing or decreasing the volume, an UI element 510 for muting the volume, an UI element 511 or 512 for increasing or decreasing the channel, or the like. The UI may omit some of the UI elements described above, or further include another UI element in addition to the UI elements described above.

Referring back to FIG. 4, the second device 200 may acquire a second user input to control the UI displayed on the second display 230 (S403). Here, the second user input may be a user input of touching, dragging, or swiping the second display 230, and is not limited thereto.

In detail, the second device 200 may acquire the second user input of activating one of the plurality of UI elements included in the UI.

Here, the activation may indicate a state where the user controls the UI element, a state where the user selects the UI element, a state where the user touches the UI element, or a state where an additional input from the user may be received through the UI element.

In the present disclosure, the "activation" may be replaced with a term having the same/similar concept, such as a "focus state", a "selection state", a "selectable state", an "input-standby state", a "ready state", or an "executable state".

The activated UI element may be visually highlighted on the second display 230. The second device 200 may change at least one of the color, border, or size of the activated UI element.

Meanwhile, the plurality of UI elements included in the UI may have a predetermined order. The second user input may be the user input to activate the UI element in a previous order of a currently activated UI element or the user input to activate the UI element in the next order of the currently activated UI element.

Alternatively, the second user input may be the user input to activate the UI element disposed above, below, left, or right of the currently activated UI element.

For example, the second device 200 may activate a first UI element disposed at one point on the second display 230 if the user input in which the user touches one point on the second display 230 is acquired. Here, the second device 200 may activate a second UI element and deactivate the first UI element if the user touches one point on the second display 230 and drags the same to the right. In addition, the second device 200 may again activate the first UI element and deactivate the second UI element if the user touches one point on the second display 230 and drags the same to the left.

Alternatively, the second device 200 may activate the first UI element disposed at a first point if the user input in which the user touches the first point on the second display 230 is acquired. Here, the second device 200 may activate the second UI element disposed at a second point on the second display 230 and deactivate the first UI element disposed at the first point if the user input of dragging to another point on the second display 230 is acquired while the user touches one point on the second display 230.

The second device 200 may output the guidance audio for guiding the second user input through the second speaker 250 in response to the second user input (S404).

In detail, the guidance audio may include information on the UI element activated by the second user input. Alternatively, the guidance audio may include information on the UI screen displayed through the second display 230. Alternatively, the guidance audio may include information on the UI element that the user touches.

For example, the second device 200 may output the guidance audio saying "Channel up" through the second speaker 250 if the UI element for performing channel up of the first device 100 is activated.

In addition, the second device 200 may acquire a third user input to control the first device 100 (S405). In detail, the second device 200 may acquire the third user input to select the activated UI element.

The third user input may be a user input of touching, dragging, tapping, or swiping one point on the second display 230, and is not limited thereto. For example, the third user input may be a touch input that drags to the right while the user touches the second display 230 using two fingers.

Alternatively, the second device 200 may acquire the third user input to control the first device 100 to perform a predetermined operation. Here, the predetermined operation may include at least one of returning to the previous operation (or previous screen), displaying the menu screen, playing/pausing, displaying the home screen, channel up/down, volume up/down, or muting. Here, each predetermined operation may be mapped to a different touch input.

The second device 200 may transmit the control instruction corresponding to the third user input to the first device 100 (S406) if the third user input is acquired. In detail, the second device 200 may transmit the control instruction corresponding to the activated UI element to the first device 100. For example, the second device 200 may transmit the control instruction for increasing the channel of the first device 100 to the first device 100 if the second user input is acquired while the "Channel Up" UI element is activated.

The first device 100 may perform an operation corresponding to the received control instruction in response to the received control instruction. For example, the first device 100 may play the content by increasing the channel of the first device 100 if the control instruction for increasing the channel of the first device 100 is received.

Meanwhile, the operation of the first device 100 that corresponds to the received control instruction may be determined based on a state of the first device 100.

In detail, the second device 200 may transmit at least one text to the first device 100 by using the keyboard application installed on the second device 200.

Here, the keyboard application may be the Braille keyboard application capable of being used by the visually impaired person. The Braille keyboard application may be an application for acquiring, from the user, a user input of inputting text or numbers through a UI having a Braille form.

For example, the second device 200 may input at least one text into the first device 100 by using the keyboard application installed on the second device 200. In addition, the first device 100 may perform an operation corresponding to at least one text if the control instruction corresponding to a "Confirm" UI element is received while at least one text is input into the first device 100. Here, at least one text may be an abbreviation of a specific text.

For example, "MO" may be an abbreviation for "MOVIE". Here, the first device 100 may execute an application "MOVIE" corresponding to the text "MO" if the control instruction is received while the text "MO" is input into the first device 100. In addition, the first device 100 may pause the playing of the content or continue the play of the paused content if the control instruction is received while no text is input.

In addition, "ST" may be an abbreviation for "SLEEP TIMER". Here, the first device 100 may execute a "SLEEP TIMER" application corresponding to the text "ST" if the control instruction is received while "ST" is input into the first device 100.

In addition, the first device 100 may receive the control instruction from the second device 200 while at least one text is not input. Here, the first device 100 may display the home screen, play/pause the content that is playing, and is not limited thereto.

As described above, the second device 200 may perform the operation corresponding to the user input if the user input is acquired. Meanwhile, a mapping relationship between the user input and the operation of the second device 200 on the remote control application may correspond to the mapping relationship between the user input and the operation of the second device 200 on the keyboard application installed on the second device 200.

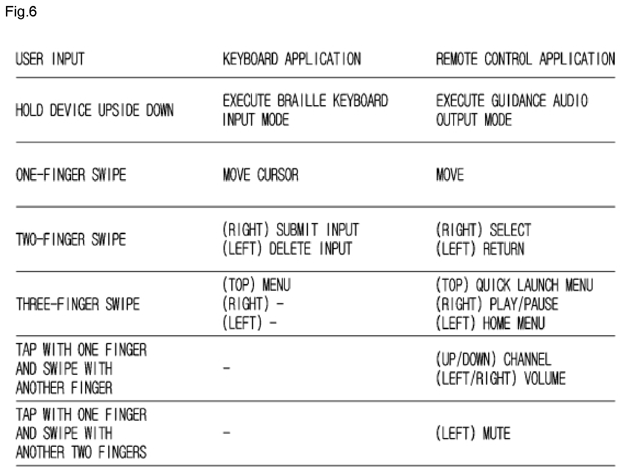

For example, the mapping relationship between the user input and the operation of the second device 200 on the remote control application and the mapping relationship between the user input and the operation of the second device 200 on the keyboard application installed on the second device 200 may be as shown in FIG. 6.

FIG. 6 is a diagram for describing a mapping relationship between the user input and the operation of the second device according to one or more embodiments of the present disclosure.

For example, referring to FIG. 6, the second device 200 may execute a Braille keyboard input mode on the keyboard application and the guidance audio output mode on the remote control application if a user input of turning the device upside down is detected through the acceleration sensor.

In addition, the second device 200 may perform an operation of moving a cursor on the keyboard application, and perform an operation of moving the activated UI element on the remote control application or an operation of moving an object selected on the first device 100 if a user input of swiping with one finger on the second display 230 is acquired.

In addition, the second device 200 may perform an operation of submitting the input text on the keyboard application. The second device 200 may also perform, on the remote control application, an operation of selecting the activated UI element, or an operation of selecting the object selected on the first device 100, if a user input of swiping to the right with two fingers on the second display 230 is acquired.

That is, the second device 200 may load the mapping relationship in the keyboard application from the second memory 210 and apply the same to the mapping relationship in the remote control application. As described above, as the mapping relationship in the keyboard application is applied to the remote control application, the user may control the operation of the remote control application, which is identical/similar to the operation of the keyboard application, by using the same user input as used in the keyboard application. Accordingly, the user who already uses the keyboard application may intuitively use the remote control application.

Meanwhile, the first device 100 may also output the content audio simultaneously if the second device 200 outputs the guidance audio. In this case, the user may not be able to clearly hear the guidance audio output by the second device 200. Accordingly, the second device 200 may decrease the audio volume of the content output by the first device 100. This configuration is described with reference to the drawing below.

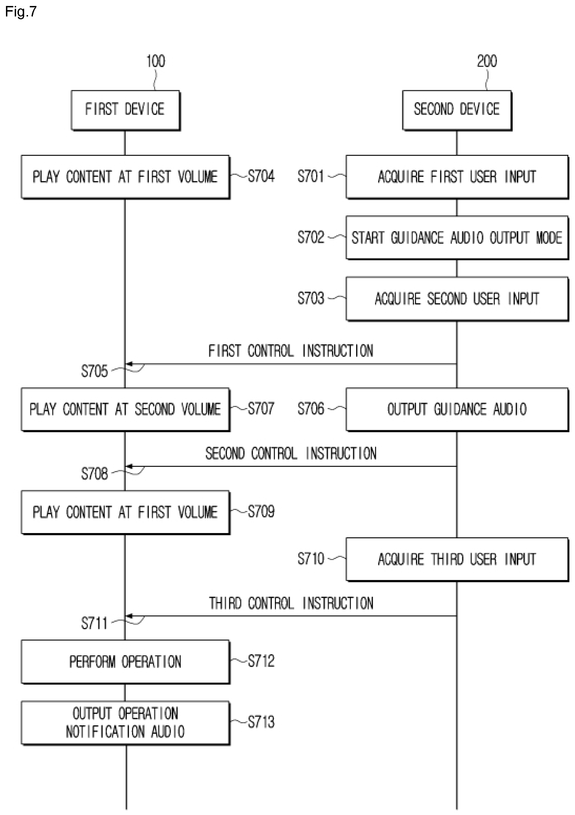

FIG. 7 is a sequence diagram for describing a method of the second device 200 for controlling the first device 100 according to one or more embodiments of the present disclosure.

Referring to FIG. 7, the second device 200 may acquire the first user input (S701). Here, the operation of the second device 200 may be the same as its operation in operation S401. As described above, the second device 200 may be detected to acquire the first user input if the predetermined movement of the second device 200 is detected.

The second device 200 may start the guidance audio output mode (S702) if the first user input is acquired. Here, the UI may include the plurality of UI elements for controlling the first device 100 as described with reference to FIG. 5.

The second device 200 may acquire the second user input to control the UI through the UI displayed on the second display 230 (S703). Here, the second user input may be an input to activate one of the UI elements included in the UI.

The second device 200 may activate one of the plurality of UI elements included in the UI if the second user input is acquired.

For example, the second device 200 may activate the UI element corresponding to "Channel Down" if the user input of dragging one finger to the right of the second display 230 is acquired while the UI element corresponding to "Channel Up" is activated.

In addition, the second device 200 may receive an additional user input and control the channel of the first device 100 if the UI element for controlling the channel of the first device 100 is activated. Alternatively, the second device 200 may receive the additional user input and control the volume of the first device 100 if the UI element for manipulating the audio volume of the first device 100 is activated. For example, the second device 200 may receive the additional user input and transmit the control instruction for decreasing the channel of the first device 100 to the first device 100 if the UI element corresponding to "Channel Down" is activated. Here, the user input of selecting the activated UI element may be an input of touching two fingers on the second display 230 and swiping the same to the right.

Meanwhile, the first device 100 may play the content through the first display 130 and the first speaker 150 (S704) before the second device 200 outputs the guidance audio. Here, the first device 100 may control the first speaker 150 to output the audio volume of the content at the first volume.

The user may not be able to clearly hear the guidance audio if the second device 200 outputs the guidance audio while the first device 100 outputs the content audio. Accordingly, the second device 200 may perform an operation of controlling the first device 100 to decrease the audio volume of the content being played while simultaneously performing an operation of outputting the guidance audio.

In detail, the second device 200 may transmit a first control instruction enabling the first device 100 to decrease the audio volume of the content to the first device 100 through the second communication interface 220 (S705). That is, the first device 100 may receive the first control instruction for outputting the content by decreasing the audio volume of the content from the second device 200 through the first communication interface 120. Here, the first control instruction may include at least one of information on a level to which the volume of the first speaker 150 is decreased and information a time point to decrease the volume of the first speaker 150.

In addition, the second device 200 may output the guidance audio through the second speaker 250 (S706). Here, a guidance audio volume may be greater than or equal to the volume of the first speaker 150 output by the first device 100.

The first device 100 may control the first speaker 150 to output the content by decreasing the audio volume of the content in response to the first control instruction (S707). Here, the first device 100 may play the content by decreasing the output volume of the first speaker 150 to a second level if the first control instruction includes information for decreasing the volume to the second level. In addition, the first device 100 may play the content by decreasing the audio volume of the content from a specific time point if the first control instruction includes information on the specific time point to decrease the audio volume of the content.

Here, a period during which the first device 100 plays the content at the decreased volume of the first speaker 150 may coincide or correspond to a period during which the second device 200 outputs the guidance audio.

The second device 200 may transmit a second control instruction for restoring the decreased audio volume of the first speaker 150 to the first device 100 through the second communication interface 220 if the guidance audio is completely output (S708). That is, the first device 100 may receive the second control instruction for restoring the decreased audio volume of the content from the second device 200 through the first communication interface 120. Here, the second control instruction may include information on a time point for the first device 100 to restore the audio volume of the first speaker 150.

The first device 100 may control the first speaker 150 to output the content by restoring the audio volume of the content in response to the second control instruction (S709). The first device 100 may play the content by restoring the audio volume of the first speaker 150 from the time point to restore the audio volume of the first speaker 150 included in the second instruction.

The second device 200 may then acquire the third user input to transmit a third control instruction for controlling the operation of the first device 100 to the first device 100 (S710).

Here, the third user input may be the user input to select the activated UI element on the UI of the remote control application. For example, the user may select the UI element by swiping two fingers to the right to "select" the activated UI element.

The second device 200 may transmit the third control instruction for controlling the operation of the first device 100 to the first device 100 if the third user input is acquired (S711).

The first device 100 may perform an operation corresponding to the third control instruction in response to the third control instruction (S712). For example, the first device 100 may play the content of a switched channel if the "Channel Up" UI element is activated through the second user input and the third user input is acquired.

In addition, the first device 100 may output operation notification audio corresponding to the operation of the first device 100 (S713). Here, the operation notification audio may include information on the operation of the first device 100. For example, the first device 100 may output audio such as "Raise the channel" if the operation of the first device 100 is to increase the channel.

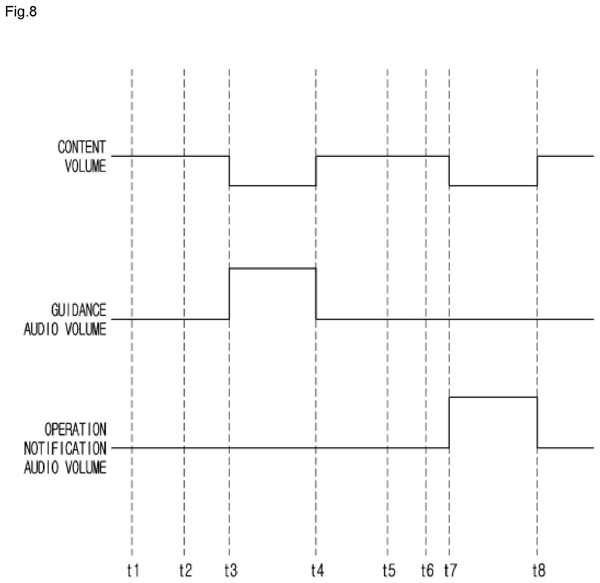

The change in the audio volume output by the first device 100 or the second device 200 over time, described with reference to FIG. 7, is described in more detail with reference to FIG. 8.

FIG. 8 is a diagram for describing a method of the first device or the second device for controlling the audio volume over time according to one or more embodiments of the present disclosure.

Referring to FIG. 8, at time point t1, the second device 200 may acquire the second user input.

At time point t2, the second device 200 may transmit the first control instruction for decreasing the audio volume of the content to the first device 100.

From time point t3, the first device 100 may play the content by decreasing the audio volume of the content in response to the first control instruction.

From time point t3, the second device 200 may output the guidance audio.

The second device 200 may transmit the second control instruction for restoring the audio volume of the content to the first device 100 if the guidance audio is completely output at time point t4.

From time point t4, the first device 100 may play the content at the restored audio volume of the content in response to the second control instruction. Meanwhile, a process of transmitting the control instruction may take some time, and the first device 100 may thus play the content at the restored audio volume of the content from time point t4 or from a time point that elapses a certain time from time point t4.

At time point t5, the first device 100 may acquire the third user input to control the first device 100.

At time point t6, the first device 100 may transmit the third control instruction corresponding to the third user input to the first device 100.

From time point t7, the first device 100 may perform the operation in response to the third control instruction and output the operation notification audio that notifies the operation of the first device 100.

From time point t7 to time point t8, the first device 100 may output the operation notification audio through the first speaker 150.

From time point t7 to time point t8, the first device 100 may output the content by decreasing the audio volume of the content.

From time point t8, the first device 100 may output the content by restoring the audio volume of the content.

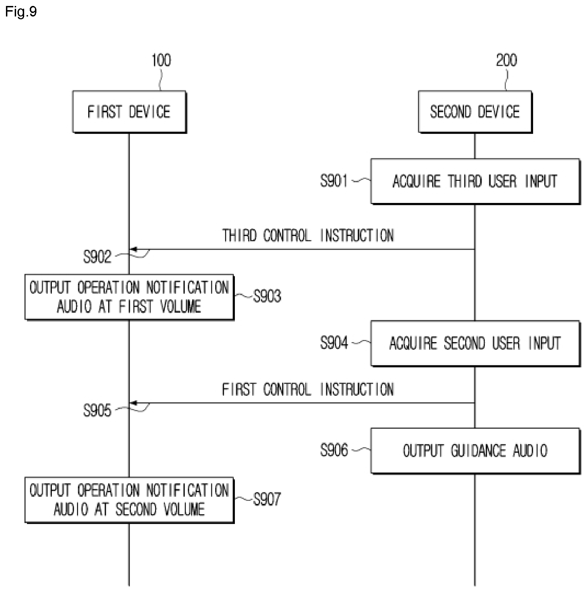

Meanwhile, according to one or more embodiments of the present disclosure, the second device 200 may acquire the plurality of second user inputs at a regular time interval. Here, the second device 200 may output the guidance audio each time the second user input is acquired. In addition, the second device 200 may control the first device 100 for the audio output by the first device 100 to be decreased each time the guidance audio is output. This configuration is described with reference to FIG. 9.

FIG. 9 is a diagram for describing a method of the first device acquiring the plurality of second user inputs for controlling the second device according to one or more embodiments of the present disclosure.

Referring to FIG. 9, the second device 200 may acquire the third user input (S901). The operation of the second device 200 in operation S901 may be the same as its operation in operation 710 shown in FIG. 7. Therefore, the operations in operations S701 to S709 before operation S710 may be performed before operation S901.

The second device 200 may transmit the third control instruction for controlling the operation of the first device 100 to the first device 100 if the third user input is acquired (S902).

The first device 100 may output the operation notification audio at the first volume (S903).

The first device 100 may output the operation notification audio at the second volume decreased from the first volume while the operation notification audio is output at the first volume.

The second device 200 may acquire the second user input before the operation notification audio is completely output (S904).

Accordingly, the second device 200 may transmit the first control instruction for decreasing the audio volume of the first device 100 to the first device 100 (S905). In addition, the second device 200 may output the guidance audio (S906).

The first device 100 may output the operation notification audio at the second volume decreased from the first volume while the guidance audio is output in response to the first control instruction (S907).

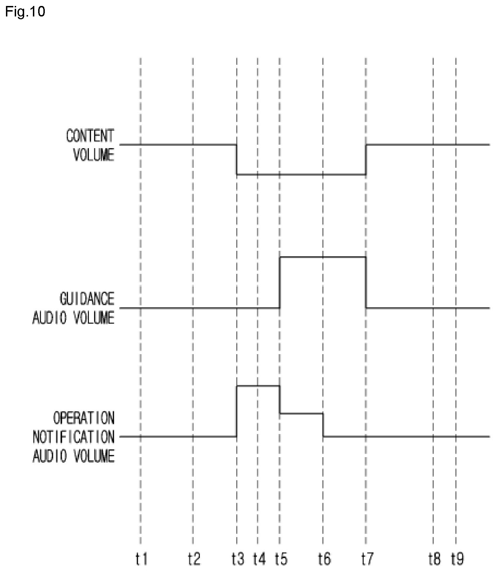

The change in the audio volume output by the first device 100 or the second device 200 over time, described with reference to FIG. 9, is described in more detail with reference to FIG. 10.

FIG. 10 is a diagram for describing a method of the first device or the second device for controlling the audio volume over time according to one or more embodiments of the present disclosure.

Referring to FIG. 10, at time point t1, the second device 200 may acquire the second user input.

At time point t2, the second device 200 may transmit the control instruction for controlling the operation of the first device 100 to the second device 200.

From time point t3, the first device 100 may output the operation notification audio at the first volume and output the content at the second volume decreased from the first volume.

At time point t4, the second device 200 may acquire the first user input before the operation notification audio of the first device 100 is completely output. In addition, the second device 200 may transmit the first control instruction for decreasing the speaker output volume of the first device 100 to the first device 100.

From time point t5, the second device 200 may output the guidance audio. Here, the second device 200 may output the guidance audio at the first volume.

From time point t5 to time point t6, the first device 100 may output the operation notification audio by decreasing an operation notification audio volume from the first volume to the second volume.

At time point t7, the guidance audio may be completely output. The second device 200 may transmit the second control instruction for restoring the audio volume of the content to the first device 100 if the guidance audio is completely output.

Accordingly, from time point t7 or a time point after time point t7, the first device 100 may play the content at the restored audio volume.

Meanwhile, according to one or more embodiments of the present disclosure, the first device 100 may be controlled by the user input without going through the second device 200. Accordingly, the first device 100 may perform the operation corresponding to the user input and output the operation notification audio.

Here, the second device 200 may be in a state of outputting the audio. The audio output by the first device 100 may not be heard clearly if the first device 100 and the second device 200 output the audio simultaneously.

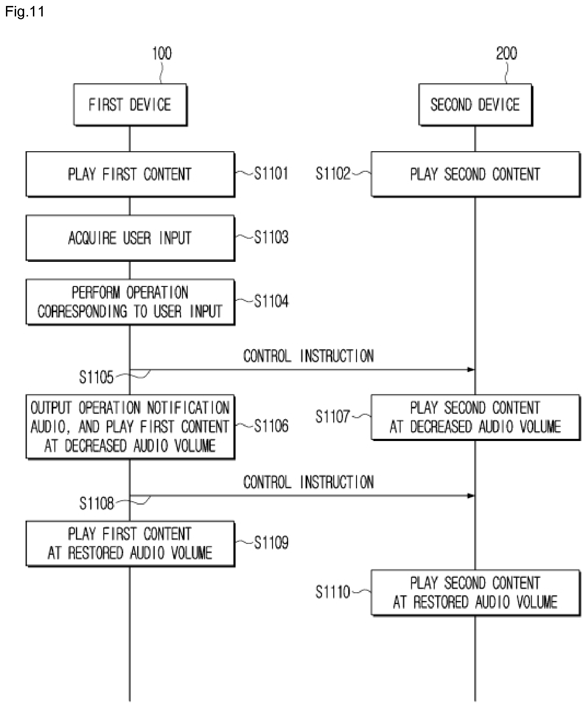

Accordingly, the first device 100 may decrease the volume of the second speaker 250 of the second device 200 while the operation notification audio is output. This configuration is described with reference to FIG. 11.

FIG. 11 is a sequence diagram for describing a method of the first device for controlling the volume of the second device according to one or more embodiments of the present disclosure.

Referring to FIG. 11, the first device 100 may play the first content (S1101), and the second device 200 may play the second content (S1102).

The first device 100 may acquire the user input to control the operation of the first device 100 through the first user interface 140 (S1103).

The method of the first device 100 for acquiring the user input may be at least partially the same as the method of the second device 200 for acquiring the user input.

The first device 100 may perform the operation corresponding to the acquired user input (S1104). For example, the first device 100 may acquire the user input to connect the first device 100 with the external device via Bluetooth through the first user interface 140. Accordingly, the first device 100 may perform an operation to establish its connection with the external device via Bluetooth.

The first device 100 may transmit the control instruction for decreasing the speaker volume of the second device 200 to the second device 200 (S1105).

In addition, the first device 100 may output the operation notification audio that notifies the performed operation, and play first content at the decreased audio volume (S1106). Here, the first device 100 may output the first content at the second volume lower than the first volume.

Meanwhile, an order of the operation in operation S1105 and the operation in operation S1106 is only one or more embodiments. The operation in operation S1106 may be performed first, or the operation in operation S1105 and the operation in operation S1106 may be performed simultaneously.

The second device 200 may play the second content at the decreased speaker volume in response to the control instruction received from the first device 100 (S1107).

The first device 100 may transmit the control instruction for restoring the decreased speaker volume to the second device 200 if the operation notification audio is completely output (S1108). In addition, the first device 100 may play the first content by restoring the audio volume of the first content (S1109).

The second device 200 may play the second content by restoring the decreased speaker volume in response to the control instruction received from the first device 100 (S1110).

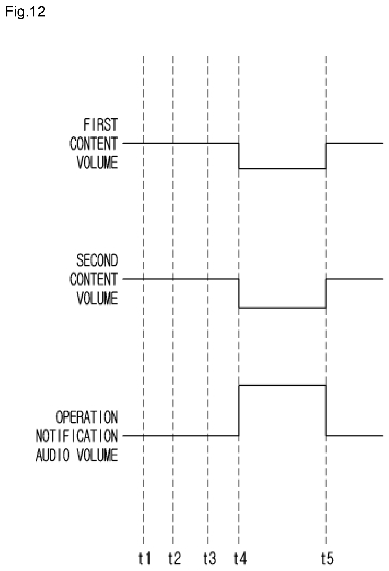

The change in the audio volume output by the first device 100 or the second device 200 over time, described with reference to FIG. 11, is described in more detail with reference to FIG. 12.

FIG. 12 is a diagram for describing a method of the first device or the second device for controlling the audio volume according to one or more embodiments of the present disclosure.

Referring to FIG. 12, at time point t1, the first device 100 may play the first content, and the second device 200 may play the second content.

At time point t2, the first device 100 may acquire the user input to control the operation of the first device 100. Accordingly, the first device 100 may perform the operation corresponding to the user input.

At time point t3, the first device 100 may transmit the control instruction for decreasing the audio volume output by the second device 200 to the second device 200.

From time point t4, the first device 100 may output the operation notification audio and play the first content at the decreased audio volume.

At time point t5, the first device 100 may play the content by restoring the audio volume of the first content, and transmit the control instruction for restoring the audio volume of the second device 200 to the second device 200 if the operation notification audio is completely output. Alternatively, t seconds before the operation notification audio is completely output, the first device 100 may transmit, to the second device 200, the control instruction for controlling the audio volume of the second device 200 to be restored t seconds later.

From time point t5 or a time point after time point t5, the second device 200 may play the content by restoring the audio volume of the second content.

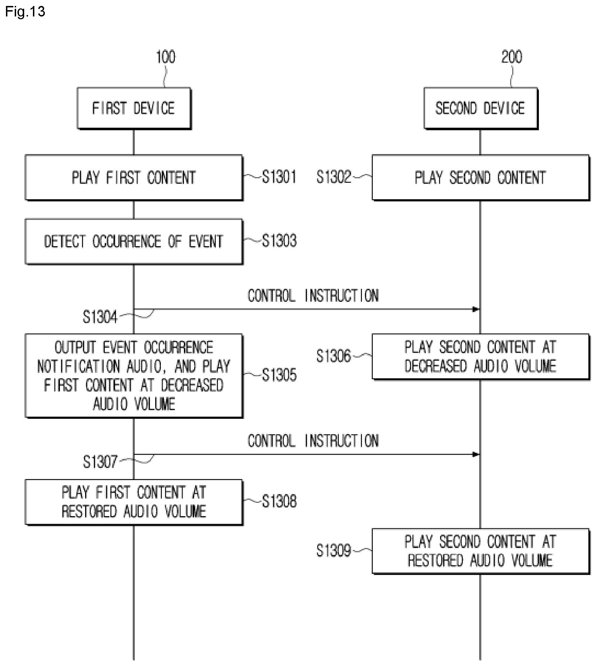

According to one or more embodiments of the present disclosure, the first device 100 may output notification audio that notifies an occurrence of an event if the occurrence of the predetermined event is detected. This configuration is described with reference to FIG. 13.

FIG. 13 is a sequence diagram for describing a method of the first device for controlling the volume of the second device according to one or more embodiments of the present disclosure.

Referring to FIG. 13, the first device 100 may play the first content (S1301), and the second device 200 may play the second content (S1302).

The first device 100 may detect the occurrence of the predetermined event (S1303).

Here, the predetermined event may be an event in which the first device 100 receives notification information from the external device. In detail, the first device 100 and at least one internet of things (IoT) device may form an IoT environment. Here, the first device 100 may receive the notification information of the IoT device from at least one IoT device. For example, the first device 100 may receive information from a refrigerator that a refrigerator door is open.

The first device 100 may output an event occurrence notification audio if the occurrence of the predetermined event is detected (S1304). For example, the first device 100 may output the notification audio saying, "The refrigerator door is open."

The first device 100 may transmit the control instruction for decreasing the audio volume of the second content to the second device 200 (S1304).

In addition, the first device 100 may output the event occurrence notification audio, and decrease the audio volume of the first content to play the content (S1305). Here, the first device 100 may output the first content at the second volume lower than the first volume.

Meanwhile, an order of the operation in operation S1304 and the operation in operation S1305 is only one or more embodiments. The operation in operation S1305 may be performed first, or the operation in operation S1304 and the operation in operation S1305 may be performed simultaneously.

The second device 200 may decrease the audio volume of the second content to play the content in response to the control instruction received from the first device 100 (S1306).

The first device 100 may transmit the control instruction for playing the second content by restoring the audio volume of the second content to the second device 200 if the event occurrence notification audio is completely output (S1307). In addition, the first device 100 may play the first content by restoring the audio volume of the first content (S1308).

The second device 200 may play the second content by restoring the audio volume of the second content in response to the control instruction received from the first device 100 (S1309).

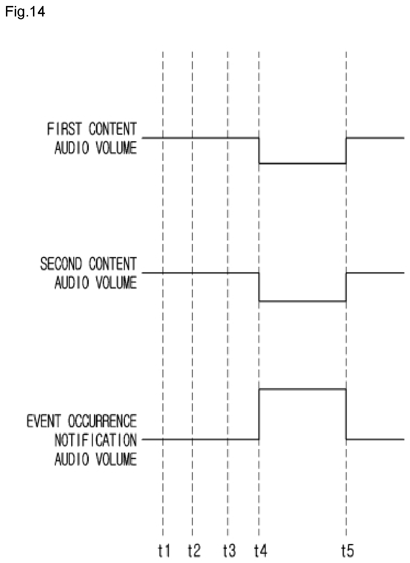

The change in the audio volume output by the first device 100 or the second device 200 over time, described with reference to FIG. 13, is described in more detail with reference to FIG. 14.

FIG. 14 is a diagram for describing a method of the first device or the second device for controlling the audio volume according to one or more embodiments of the present disclosure.

Referring to FIG. 14, at time point t1, the first device 100 may play the first content, and the second device 200 may play the second content.

At time point t2, the first device 100 may detect the occurrence of the predetermined event.

At time point t3, the first device 100 may transmit the control instruction for decreasing the audio volume of the second content and play the second content to the second device 200.

From time point t4, the first device 100 may output the event occurrence notification audio, decrease the audio volume of the first content, and play the first content.

At time point t5, the first device 100 may play the first content by restoring the audio volume of the first content, and transmit the control instruction for playing the second content by restoring the audio volume of the second content to the second device 200 if the event occurrence notification audio is completely output. Alternatively, t seconds before the event occurrence notification audio is completely output, the first device 100 may transmit, to the second device 200, the control instruction for playing the second content by restoring the audio volume of the second content t seconds later.

From time point t5 or a time point after time point t5, the second device 200 may play the second content by restoring the audio volume of the second content.

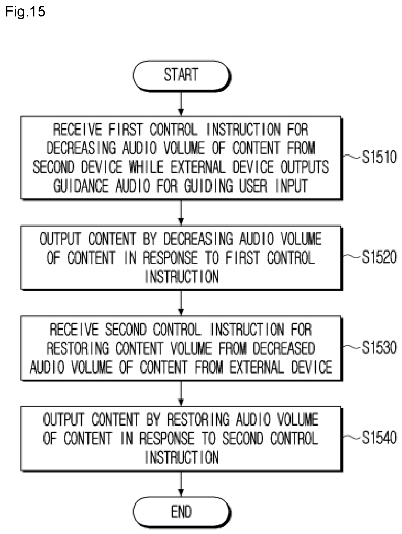

FIG. 15 is a diagram for describing a controlling method of the first device according to one or more embodiments of the present disclosure.

Referring to FIG. 15, the first device 100 may receive the first control instruction for decreasing the audio volume of the content from the second device 200 while the guidance audio for guiding the user input is output by the external device (S1510).

The first device 100 may output the content by decreasing the audio volume of the content in response to the first control instruction (S1520).

In detail, the first device 100 may receive information on the time point at which the audio volume output by the external device is decreased from the external device, and decrease the audio volume of the content from the time point at which the audio volume output by the external device is decreased.

The first device 100 may receive the second control instruction for restoring the decreased audio volume of the content from the external device (S1530).

The first device 100 may output the content by restoring the audio volume of the content in response to the second control instruction (S1540).

The first device 100 may output audio for an operation of the electronic apparatus that corresponds to the third control instruction based on the third control instruction for controlling the operation of the electronic apparatus being received from the external device.

The first device 100 may output the audio for the operation of the electronic apparatus by decreasing the restored content volume based on a control instruction for decreasing the restored audio volume of the content being received from the external device while additional guidance audio for guiding the additional user input is output by the external device.

The first device 100 may execute an application corresponding to at least one text if the user input to input at least one text and the third control instruction for controlling the operation of the electronic apparatus are received.

Meanwhile, the first device 100 may detect the occurrence of the event. In addition, the first device 100 may transmit the control instruction for decreasing the audio volume output by the external device to the external device while a voice notifying the occurrence of the event is output through the speaker. The first device 100 may transmit the control instruction for restoring the decreased audio volume output by the external device to the external device if the voice notifying the occurrence of the event through the speaker is completely output.

The first device 100 may decrease the audio volume of the content output that is through the speaker while the voice notifying the occurrence of the event is output through the speaker.

The first device 100 may transmit the information on the time point at which the voice notifying the occurrence of the event is output to the external device to decrease the audio volume output by the external device from the time point at which the voice notifying the occurrence of the event is output.

Although the various embodiments have been individually described hereinabove, each embodiment is not necessarily implemented individually, and may also be entirely or partially combined with at least one other embodiment and implemented together in one product.

Meanwhile, the term "~er/~or" or "module" used in the present disclosure may include a unit including hardware, software, or firmware, and may be used interchangeably with the term, for example, logic, a logic block, a component, or a circuit. The "~er/~or" or "module" may be an integrally formed component, or a minimum unit or part performing one or more functions. For example, the module may include the application-specific integrated circuit (ASIC).

The various embodiments of the present disclosure may be implemented by software including an instruction stored on a machine-readable storage medium (for example, a computer-readable storage medium). A machine may be a device that invokes the stored instruction from the storage medium, may be operated based on the invoked instruction, and may include the first device 100 in the disclosed embodiments. If the instruction is executed by the processor, the processor may directly perform a function corresponding to the instruction or other components may perform the function corresponding to the instruction under the control of the processor. The instruction may include the codes generated or executed by the compiler or the interpreter. The machine-readable storage medium may be provided in the form of a non-transitory storage medium. Here, the term "non-transitory" indicates that the storage medium is tangible without including a signal, and does not distinguish whether data are semi-permanently or temporarily stored in the storage medium.

According to one or more embodiments, the methods according to the various embodiments disclosed in this document may be included in a computer program product and then provided. The computer program product may be traded as a product between a seller and a purchaser. The computer program product may be distributed in a form of the machine-readable storage medium (for example, a compact disc read only memory (CD-ROM)), or may be distributed online through an application store (for example, PlayStore^{™}). In case of the online distribution, at least portions of the computer program product may be at least temporarily stored on the storage medium such as a memory of a manufacturer server, a server of an application store, or a relay server or be temporarily generated.

Each of the components (for example, modules or programs) according to the various embodiments may include a single entity or a plurality of entities, and some of the corresponding sub-components described above may be omitted or other sub-components may be further included in the various embodiments. Alternatively or additionally, some of the components (e.g., modules or programs) may be integrated into the single entity, and may perform functions performed by the respective corresponding components before being integrated in the same or similar manner. Operations performed by the modules, the programs, or other components according to the various embodiments may be executed in a sequential manner, a parallel manner, an iterative manner, or a heuristic manner, at least some of the operations may be performed in a different order or be omitted, or other operations may be added.

## Claims

1. An electronic apparatus comprising:
a speaker;
a communication interface configured to communicate with an external device that is configured to control the electronic apparatus;
memory storing at least one instruction; and
at least one processor connected to the memory and configured to control the electronic apparatus, wherein the at least one processor is configured to execute the at least one instruction to:
control the speaker to play content at a first volume;
receive a first control instruction from the external device through the communication interface, the first control instruction being for decreasing an audio volume of the content while the external device outputs guidance audio for guiding a user input;
control the speaker to decrease the audio volume of the content based on the first control instruction;
receive a second control instruction from the external device through the communication interface, the second control instruction being for restoring the audio volume of the content to the first volume; and
control the speaker to restore the audio volume of the content to the first volume based on the second control instruction.

2. The electronic apparatus as claimed in claim 1, wherein the at least one processor is further configured to execute the at least one instruction to:
receive information from the external device through the communication interface, the information comprising a time point at which the audio volume of the content is decreased; and
decrease the audio volume of the content at the time point.

3. The electronic apparatus as claimed in claim 1, wherein the at least one processor is further configured to execute the at least one instruction to:
control the speaker to output audio for an operation of the electronic apparatus that corresponds to a third control instruction, based on receiving the third control instruction from the external device through the communication interface.

4. The electronic apparatus as claimed in claim 3, wherein the at least one processor is further configured to execute the at least one instruction to:
control the speaker to decrease the restored audio volume of the content based on receiving a control instruction from the external device through the communication interface, while the external device outputs additional guidance audio for guiding an additional user input.

5. The electronic apparatus as claimed in claim 1, wherein the at least one processor is further configured to execute the at least one instruction to:
execute an application corresponding to at least one text, based on the user input comprising the at least one text, and receiving a third control instruction for controlling an operation of the electronic apparatus through the communication interface.

6. The electronic apparatus as claimed in claim 1, wherein the at least one processor is further configured to execute the at least one instruction to:
detect an occurrence of an event;
transmit a decreasing control instruction to the external device through the communication interface, the decreasing control instruction being for decreasing volume of audio output by the external device to a second volume, while a voice notifying the occurrence of the event is output through the speaker; and
transmit, to the external device through the communication interface, a restoring control instruction for restoring the decreased volume of the audio output by the external device from the second volume, based on output of the voice notifying the occurrence of the event being completed.

7. The electronic apparatus as claimed in claim 6, wherein the at least one processor is further configured to execute the at least one instruction to:
detect the occurrence of the event while the content is played; and
decrease the audio volume of the content that is output through the speaker while outputting the voice notifying the occurrence of the event through the speaker.

8. The electronic apparatus as claimed in claim 6, wherein the at least one processor is further configured to execute the at least one instruction to:
transmit information comprising a time point at which the voice notifying the occurrence of the event is output to the external device through the communication interface, to decrease the volume of the audio output by the external device at the time point.

9. A method of controlling an electronic apparatus, the method comprising:
playing content at a first volume;
receiving a first control instruction from an external device, the first control instruction being for decreasing an audio volume of the content while guidance audio for guiding a user input is output by the external device;
decreasing the audio volume of the content based on the first control instruction;
receiving a second control instruction from the external device, the second control instruction being for restoring the audio volume of the content to the first volume; and
restoring the audio volume of the content to the first volume based on the second control instruction.

10. The method as claimed in claim 9, further comprising:
receiving information from the external device, the information comprising a time point at which the audio volume of the content is decreased; and
decreasing the audio volume of the content at the time point.

11. The method as claimed in claim 9, further comprising:
outputting audio for an operation of the electronic apparatus that corresponds to a third control instruction, based on receiving the third control instruction from the external device.

12. The method as claimed in claim 11, further comprising:
decreasing the restored audio volume of the content based on receiving a control instruction from the external device, while additional guidance audio for guiding an additional user input is output by the external device.

13. The method as claimed in claim 9, further comprising:
executing an application corresponding to at least one text, based on the user input comprising the at least one text, and receiving a third control instruction for controlling an operation of the electronic apparatus.

14. The method as claimed in claim 9, further comprising:
detecting an occurrence of an event;
transmitting a decreasing control instruction to the external device, the decreasing control instruction being for decreasing volume of audio output by the external device to a second volume, while a voice notifying the occurrence of the event is output; and
transmitting a restoring control instruction to the external device, the restoring control instruction being for restoring the decreased volume of the audio output by the external device from the second volume, based on output of the voice notifying the occurrence of the event being completed.

15. The method as claimed in claim 14, further comprising:
decreasing the audio volume of the content that is output through a speaker while outputting the voice notifying the occurrence of the event.
